# EUROPÄISCHE PATENTSCHRIFT

(11) **EP 1 097 315 B1**
(45) Veröffentlichungstag und Bekanntmachung des Hinweises auf die Patenterteilung: **12.12.2001**
(21) Anmeldenummer: 99934628.1
(22) Anmeldetag: 08.07.1999
(51) Int. Cl.: F16H 1/00

(54) **GETRIEBESYSTEM**
TRANSMISSION SYSTEM
SYSTEME DE BOITE DE VITESSES

(30) Priorität: 13.07.1998 DE 19831293
(43) Veröffentlichungstag der Anmeldung: 09.05.2001
(73) Patentinhaber: ZF FRIEDRICHSHAFEN Aktiengesellschaft, 88038 Friedrichshafen (DE)
(72) Erfinder: EHRLINGER, Friedrich, D-88048 Friedrichshafen (DE); STAUBER, Roland, D-88046 Friedrichshafen (DE)
(86) Internationale Anmeldenummer: EP9904794
(87) Internationale Veröffentlichungsnummer: WO0004302

(56) Entgegenhaltungen:
- WO-A-92/21892
- DE-A- 3 840 403
- DE-C- 4 129 290
- DE-C- 4 316 153
- US-A- 5 385 066

## Beschreibung

Die Erfindung betrifft ein System von Bauformen für Getriebe von Fahrzeugen nach dem Oberbegriff von Anspruch 1.

Der Kostendruck zwingt Getriebehersteller, die notwendigen Varianten einer Produktpalette mit einem Minimum von unterschiedlichen Bauteilen zu realisieren. Entscheidend sind nicht allein die variablen Produktkosten, sondern auch die Komplexitätskosten, die durch die Vielzahl von Bauteilen entstehen.

Veränderungen bei Verbrennungsmotoren durch Einführung elektronischer Einspritztechnik und das Bedürfnis für kostenoptimale Lösungen für die unterschiedlichen Einsatzbedürfnisse der Fahrzeuge führen aber zwangsläufig immer wieder zu unterschiedlichen Produkten.
Für die Klasse der mittleren und schweren Lkw wird beispielsweise eine Getriebepalette gewünscht, die folgende Anforderungen bedient:
- 12 Gänge, fein gestuft in den oberen Gängen;
- wahlweise Direktgang oder Schnellgang;
- gleiche oder ähnliche Bedingung der verschiedenen Getriebe;
- 10 Gänge mit weniger feiner Stufung;
- breite Drehmomentbereiche, ca. 1 000 Nm bis ca. 3 000 Nm;
- alle Produkte handgeschaltet, alternativ teilund/oder vollautomatisiert.

Eine bekannte Lösung für die Verwendung gleicher Teile für unterschiedliche Getriebe zeigt das ECOSPLIT-16-Gang-Getriebe der Anmelderin, das beispielsweise in der Veröffentlichung "Johannes Looman, Zahnradgetriebe, Dritte Auflage, Springer-Verlag, Berlin Heidelberg 1996" auf den Seiten 264 ff in verschiedenen Ausgestaltungen dargestellt wird. Das gleiche Getriebekonzept führt mit unterschiedlichen Radbreiten zur Übertragung verschieden großer Drehmomente. Unterschiedliche Übersetzungsreihen ergeben Ausführungen für Direktgang oder Schnellgangversionen. Anpassungen können durch Längenänderung der Räder, Wellen, Gehäuse, Schaltung etc. vorgenommen werden. Zusätzliche Aggregate wie Intarder, können zu einer Änderung des Gehäuses und der antreibenden Verzahnungen führen.
Die verwendete Produktvielfalt führt zu ungewollt hohen Logistikkosten und zu Anpassungskosten an die jeweiligen Individuellen Gegebenheiten.
Aus der DE 41 29 290 Al ist eine Getriebebaureihe bei einem mehrgängigen Getriebe zur Verringerung der Teilevielfalt für verschiedene zulässige Eingangsdrehmomente bekannt. Hier sind aber nur Getriebe mit jeweils gleicher Anzahl an Übersetzungsstufen vorgesehen. Die Getriebebaureihen betreffen keine Getriebe mit unterschiedlicher Gangzahl.

Vielfach weisen diese Getriebe Versionen mit zwei unterschiedlichen Übersetzungsreihen auf. Dies wird von den Getriebeherstellern angeboten, damit den Fahrzeugherstellern ansonsten baugleiche Getriebe zur Verfügung stehen, die an unterschiedliche Verwendungszwecke der Fahrzeuge angleichbar sind. So lassen sich beispielsweise Getriebe in Schnellgang- und Direktgangversionen bilden, die für Gelände- oder Straßeneinsatz eines Fahrzeugs verwendet werden.

Aufgabe der Erfindung ist es, die bestehenden Probleme und hohen Kosten zu beseitigen und ein System von gleichwertig verwendbaren Bauteilen aufzuzeigen, die für verschiedene Getriebe mit unterschiedlichen Gangzahlen austauschbar sind.

Die Aufgabe wird gelöst durch ein System von Bauformen mit den Merkmalen des Anspruchs 1. Bevorzugte Ausführungsarten sind Gegenstand von Unteransprüchen.

Es wird vorgeschlagen, eine Baureihe von Getrieben derart vorzusehen, daß ausgehend von einer Grundvariante, die eine bestimmte Anordnung von Zahnradpaaren aufweist, eine weitere Variante erzeugt werden kann, indem in Form eines modularen Baukastens nur ein Zahnradpaar geändert oder hinzugefügt wird. Dadurch lassen sich entweder unter Beibehaltung der bisherigen Anzahl von Übersetzungsstufen eine veränderte Gesamtübersetzung des Getriebes erzielen, oder eine höhere Anzahl an Übersetzungsstufen. In allen Fällen bleiben die Zahnräder des Gruppengetriebes unverändert. Alle Zahnradpaare der Variante mit der geringsten Anzahl an Übersetzungsverhältnissen bleiben in allen Varianten erhalten.

Das gesamte Getriebe besteht aus einem mehrgängigen Splitgetriebe, einem mehrgängigen Hauptgetriebe und einem mehrgängigen Gruppengetriebe, die in einer Reihe hintereinander angeordnet sind. Das erfindungsgemäße System läßt sich sowohl für Getriebe mit einer Vorgelegewelle anwenden, als auch bei Getrieben mit einer Lastverteilung auf mehrere, vorzugsweise zwei, Vorgelegewellen. Das Gruppengetriebe besteht vorzugsweise aus einem Planetengetriebe, dessen Sonnenrad von der Hauptwelle des Getriebes angetrieben wird und dessen Planetenträger die Abtriebswelle des Getriebes darstellt. Das Hohlrad des Planetengetriebes kann wahlweise mit dem Getriebegehäuse oder mit dem Planetenträger zur Bildung verschiedener Übersetzungsstufen gekoppelt werden. Vorzugsweise wird die Grundvariante von 8-Gang-Varianten gebildet. Von diesen ausgehend werden nach dem erfindungsgemäßen System in vorteilhaften Ausführungen 10-Gang-Varianten und 12-Gang-Varianten gebildet.

Als grundlegende Voraussetzung ist der Stufensprung φ zwischen allen Übersetzungsstufen gleich. Dieser Stufensprung kann auch als Halbstufensprung φ^{0.5} vorgesehen sein. Die Achsabstände der Wellen in den Getrieben sind in allen Varianten gleich.

In einer vorteilhaften Ausgestaltung weist die 12-Gang-Variante gegenüber der 10-Gang-Variante eine zusätzliche Zahnradpaarung auf, die so gestaltet ist, daß beim 12-Gang-Getriebe die Übersetzung des 9. Ganges zwischen den Übersetzungen der Gänge 8 und 9 des 10-Gang-Getriebes und die Übersetzung des 11. Ganges zwischen den Übersetzungen der Gänge 9 und 10 des 10-Gang-Getriebes liegt.

In einer weiteren vorteilhaften Ausgestaltung wird vorgeschlagen, zur Bildung einer Schnellgangvariante eines Getriebes bei gleicher Anzahl der Übersetzungsstufen ein Radpaar des Hauptgetriebes zu wechseln, das nicht ein Radpaar einer Konstanten darstellt und die weiteren Radpaare des Getriebes gleich zu lassen.

In einer weiteren vorteilhaften Ausgestaltung wird vorgeschlagen, zur Bildung einer Schnellgangvariante eines Getriebes mit einer um zwei Übersetzungsstufen erhöhten Anzahl von Übersetzungsstufen ein Radpaar des Hauptgetriebes hinzuzufügen und die weiteren Radpaare des Getriebes gleich zu lassen.

Eine weitere vorteilhafte Ausgestaltung umfaßt zur Bildung einer Schnellgangvariante eines Getriebes mit einer um zwei Übersetzungsstufen erhöhten Anzahl von Übersetzungsstufen, das aus einer Direktgangvariante gebildet wird, das Hinzufügen eines Radpaares zum Hauptgetriebes, wobei das hinzugefügte Radpaar nicht ein Radpaar einer Konstanten darstellt und die weiteren Radpaare des Getriebes gleich bleiben.

In einer weiteren vorteilhaften Ausgestaltung wird vorgeschlagen, zur Bildung einer Schnellgangvariante einen Radsatz einer Konstanten durch einen um zwei Übersetzungsstufensprünge schnelleren Radsatz zu ersetzen und die weiteren Radpaare des Getriebes gleich zu belassen.

Eine weitere vorteilhafte Ausgestaltung schlägt vor, bei Handschaltung des Getriebes zur Änderung der Schalthebelstellungen eines Schaltbildes wenigstens ein Zahnrad des Hauptgetriebes auf der gleichen Welle um 180 Grad um eine gedachte Achse gedreht anzuordnen. Dabei ist die gedachte Achse rechtwinklig zu einer Längsachse der Welle ausgebildet.

In einer weiteren vorteilhaften Ausgestaltung wird vorgeschlagen, daß bei einem 12-Gang-Getriebe die Übersetzungsstufen 1 bis 8 und der Rückwärtsgang von Hand schaltbar sind und die Übersetzungsstufen 9 bis 12 automatisiert schaltbar sind und im Schaltbild des Getriebes eine Schalthebelstellung vorgesehen ist, die das Einleiten eines automatisierten Schaltmodus kennzeichnet.

In einer weiteren vorteilhaften Ausgestaltung wird vorgeschlagen, daß bei einem 10-Gang-Getriebe die Übersetzungsstufen 1 bis 8 und der Rückwärtsgang von Hand schaltbar sind und die Übersetzungsstufen 9 und 10 automatisiert schaltbar sind und im Schaltbild des Getriebes eine Schalthebelstellung vorgesehen ist, die das Einleiten eines automatisierten Schaltmodus kennzeichnet.

In noch einer weiteren vorteilhaften Ausgestaltung wird vorgeschlagen, daß bei einem 10-Gang-Getriebe die Übersetzungsstufen 1 bis 6 und Rückwärtsgang von Hand schaltbar sind und die Übersetzungsstufen 7 bis 10 automatisiert schaltbar sind und im Schaltbild des Getriebes eine Schalthebelstellung vorgesehen ist, die das Einleiten eines automatisierten Schaltmodus kennzeichnet.

Für die vorgenannten Getriebe mit automatisiertem Schaltmodus wird als eine vorteilhafte Ausführung vorgeschlagen, daß die Schalthebelstellung für den automatisierten Schaltmodus in einem H- bzw. HH-Schaltbild am äußeren rechten Ende der Wählgasse liegt.

Ein anderes vorteilhaftes Schaltbild zeigt die Schalthebelstellung für den automatisierten Schaltmodus in einem H- bzw. HH-Schaltbild am Ende einer äußeren rechten Schaltgasse.

Noch ein anderes vorteilhaftes Schaltbild zeigt die Schalthebelstellung für den automatisierten Schaltmodus in einem H- bzw. HH-Schaltbild auch am äußeren rechten Ende der Wählgasse, wobei zum Erreichen dieser Schalthebelstellung eine Position in der Wählgasse vorgesehen ist, an der eine Schaltung der Bereichsgruppe bewirkt wird.

Noch eine weitere vorteilhafte Ausgestaltung zeigt, daß die 12-Gang-Variante gegenüber der 10-Gang-Variante eine zusätzliche Zahnradpaarung aufweist, die so gestaltet ist, daß beim 12-Gang-Getriebe die Übersetzung des neunten Ganges einen halben Übersetzungssprung φ^{0.5} schneller ist als die Übersetzung des achten Ganges der 10-Gang-Variante und die Übersetzung des elften Ganges einen halben Übersetzungssprung schneller ist als die Übersetzung des neunten Ganges der 10-Gang-Variante.

Noch eine weitere vorteilhafte Ausgestaltung zeigt, daß die 12-Gang-Variante gegenüber der 10-Gang-Variante eine zusätzliche Zahnradpaarung aufweist, die so gestaltet ist, daß beim 12-Gang-Getriebe die Übersetzung des zehnten Ganges einen halben Übersetzungssprung φ^{0.5} schneller ist als die Übersetzung des neunten Ganges der 10-Gang-Variante und die Überstzung des zwölften Ganges einen halben Übersetzungssprung schneller ist als die Übersetzung des zehnten Ganges der 10-Gang-Variante. Dadurch wird die Gesamtspreizung des Getriebes um einen halben Übersetzungssprung φ^{0.5} erhöht.

In einer weiteren vorteilhaften Ausgestaltung wird vorgeschlagen, daß in den Teilgetrieben jeweils eine unterschiedliche Anzahl identischer Vorgelegewellen vorgesehen ist, wobei die Radpaare bei Getrieben mit unterschiedlichen Drehmomentkapazitäten gleiche Verzahnungsbreiten aufweisen und die Gehäuse und Schaltungen gleich sind.

Die Erfindung wird anhand einer Zeichnung näher erläutert.
Es zeigen:
- Fig. 1: ein Getriebeschema für ein Direktganggetriebe mit 8 Gängen;
- Fig. 2: ein Getriebeschema für ein Schnellganggetriebe mit 8 Gängen;
- Fig. 3: ein Schaltbild für ein 8-Gang-Getriebe;
- Fig. 4: ein Getriebeschema für ein Direktganggetriebe mit 10 Gängen;
- Fig. 5: ein Getriebeschema für ein Schnellganggetriebe mit 10 Gängen;
- Fig. 6: ein Schaltbild für ein 10-Gang-Getriebe;
- Fig. 7: ein Getriebeschema für ein Direktganggetriebe mit 10 Gängen;
- Fig. 8: ein weiteres Getriebeschema für ein Schnellganggetriebe mit 10 Gängen;
- Fig. 9: ein weiteres Schaltbild für ein 10-Gang-Getriebe;
- Fig. 10: ein Getriebeschema für ein Direktganggetriebe mit 12 Gängen
- Fig. 11: ein Getriebeschema für ein Schnellganggetriebe mit 12 Gängen;
- Fig. 12: ein Schaltbild für ein 12-Gang-Getriebe;
- Fig. 13: ein weiteres Getriebeschema für ein Schnellganggetriebe mit 12 Gängen;
- Fig. 14: ein weiteres Getriebeschema für ein Schnellganggetriebe mit 12 Gängen;
- Fig. 15: ein weiteres Schaltbild für ein 12-Gang-Getriebe;
- Fig. 16 bis 20: Schaltbilder und
- Fig. 21 bis 24: Übersetzungsreihen.

In allen Figuren werden gleiche Bauteile mit gleichen Bezugszeichen versehen.

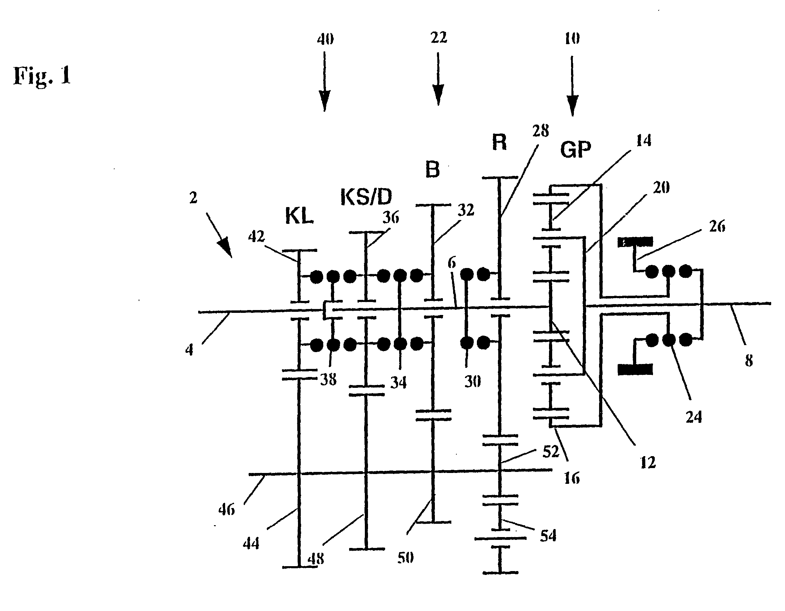

Die Fig. 1 zeigt ein Getriebe 2 in einer 8-Gang-Variante. Eine Eingangswelle 4 ist koaxial zu einer Hauptwelle 6 eines Hauptgetriebeteils 22 angeordnet. Am Ende der Hauptwelle 6 ist ein Sonnenrad 12 eines als Planetengetriebe ausgebildeten Gruppengetriebeteils 10 vorgesehen. Das Sonnenrad 12 kämmt mit Planetenrädern 14, die auf einem Planetenträger 20 gelagert sind. Die Planetenräder 14 kämmen weiterhin mit einem Hohlrad 16, das über eine Schalteinrichtung 24 entweder mit dem Gehäuse 26 oder mit der Abtriebswelle 8 des Getriebes 2 verbindbar ist. Die Abtriebswelle 8 ist mit dem Planetenträger 20 verbunden. Auf der Hauptwelle 6 sind weiterhin ein Rückwärtsgangzahnrad 28 angeordnet, das über eine Schalteinrichtung 30 mit der Hauptwelle 6 drehfest verbindbar ist.
Auf der Hauptwelle 6 sind weiterhin ein Zahnrad 32 angeordnet, das über eine Schalteinrichtung 34 mit der Hauptwelle 6 drehfest verbindbar ist. Ein weiteres Zahnrad 36 auf der Welle 6 ist ebenfalls über die Schalteinrichtung 34 mit der Welle 6 verbindbar. Das Zahnrad 36 kann auch über Schalteinrichtung 38 im Splittergetriebeteil 40 mit der Eingangswelle 4 verbunden werden. Die Eingangswelle 4 trägt ein gegenüber der Eingangswelle frei drehbares Zahnrad 42, das mit einem Zahnrad 44 der Vorgelegewelle 46 des Hauptgetriebes 22 in Eingriff steht. An ihrem dem Hauptgetriebe 22 zugewandten axialen Ende trägt die Eingangswelle 4 die Schalteinrichtung 38, die es ermöglicht, die Eingangswelle 4 entweder mit dem genannten lose drehenden Zahnrad 42 oder mit dem auf der Hauptwelle 6 des Hauptgetriebes 22 frei drehbar angeordneten Zahnrad 36 zu einer Drehmomentübertragung drehfest zu verbinden. Die erste Zahnradpaarung mit dem losen Zahnrad 42 auf der Eingangswelle 4 und dem damit kämmenden Zahnrad 44 auf der Vorgelegewelle 46 wird auch häufig als erste Konstante oder Konstante I bezeichnet, während die zweite Zahnradpaarung, bestehend aus dem auf der Hauptwelle 6 angeordneten losen Zahnrad 36 und dem damit kämmenden Zahnrad 48 auf der Vorgelegewelle 46 als zweite Konstante oder Konstante II bezeichnet wird. Mit Hilfe der Schalteinrichtung 38 wird entweder die Konstante I oder die Konstante II in die Drehmomentübertragung eingeschaltet. Ein weiteres Zahnrad 50 auf der Vorgelegewelle 46 kämmt mit dem Zahnrad 32 und ein Zahnrad 52 auf der Vorgelegewelle 46 kämmt mit einem Rückwärtsgangrad 54, das wiederum mit dem Zahnrad 28 kämmt.

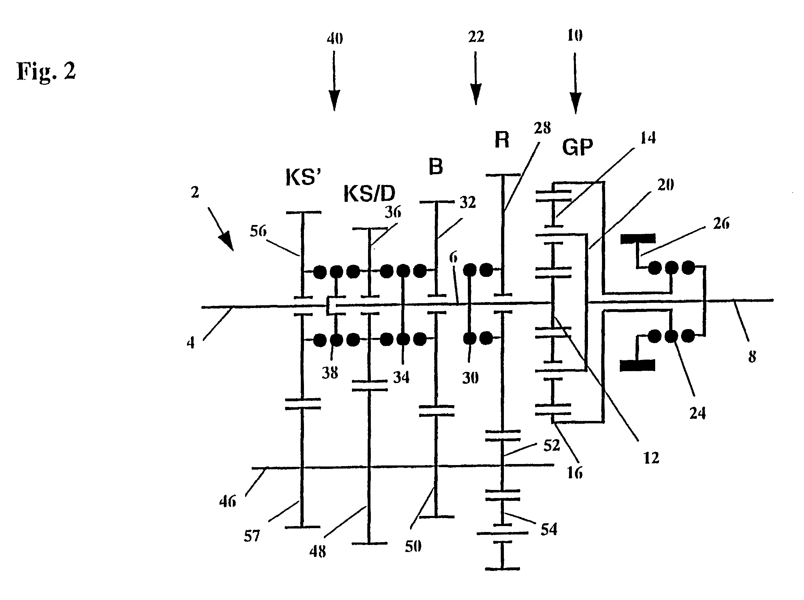

Die Fig. 2 zeigt eine Schnellgangvariante des 8-Gang-Getriebes nach Fig. 1. Dabei ist das Zahnradpaar der Konstante I, bestehend aus den Zahnrädern 42 und 44 aus Fig. 1 getauscht gegen ein um zwei Übersetzungsstufen schnelleres Zahnradpaar, das aus den Zahnrädern 56 und 57 besteht. Alle anderen Bauteile bleiben gleich wie in Fig. 1.

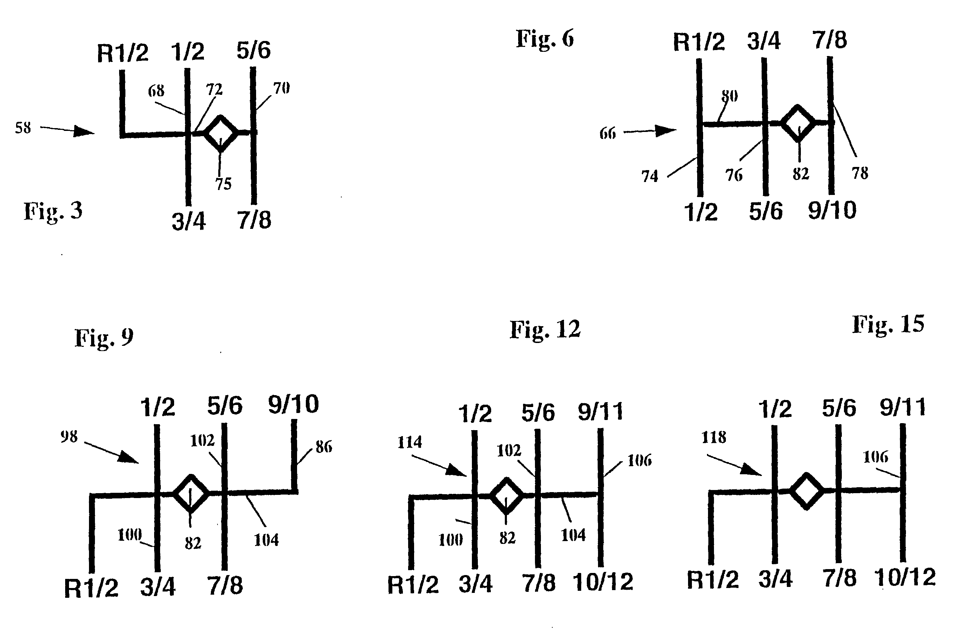

Die Fig. 3 zeigt ein Schaltbild 58 für 8-Gang-Getriebe, das für beide Varianten nach Fig. 1 und Fig. 2 gilt. In der Schalthebelstellung, die mit R1/2 bezeichnet ist, ist die Schalteinrichtung 30 aus Fig. 1 so geschaltet, daß das Zahnrad 28 für den Rückwärtsgang mit der Hauptwelle 6 drehfest verbunden ist. Die Umschaltung zwischen dem 1. und 2. Rückwärtsgang erfolgt durch die Schalteinrichtung 38 im Splittergetriebeteil 40, wobei die Schalthebelstellung in der Position R1/2 beibehalten wird. Beim Wechsel in die Schaltgasse 68 wird zunächst die Schalteinrichtung 30 aus ihrer Drehmomentübertragung ausgeschaltet und anschießend in der Schaltgasse 68 durch Betätigung der Schalteinrichtung 34 entweder die Schalthebelstellung für die Gänge 1/2 oder 3/4 eingelegt. Auch in diesen Schalthebelpositionen wird wie in allen folgenden entsprechend bezeichneten Positionen durch die Schalteinrichtung 38 ein Wechsel zwischen Gang 1 und 2 bzw. 3 und 4 vorgenommen. Ein Wechsel in die Schaltgasse 70 bewirkt ein Umschalten der Schalteinrichtung 24 von einer langsamen Übersetzung in eine schnelle Übersetzung. Dazu wird in der Wählgasse 72 eine Position 75 überwunden, die eine überwiegend pneumatisch betätigte Umschaltung der Schalteinrichtung 24 bewirkt. Anschließend wird bei der Schaltung in der Schaltgasse 70 wieder die Schalteinrichtung 34 betätigt, nach rechts entsprechend der Fig. 1 oder 2 zum Erreichen der Schalthebelposition 5/6 und nach links um die Position 7/8 zu erreichen.

Die Getriebevarianten nach Fig. 1 und 2 stellen die Grundvarianten dar. Die darin verwendeten Verzahnungen der Bauteile sind in allen folgenden Varianten vorhanden und bleiben für alle Varianten gleich.

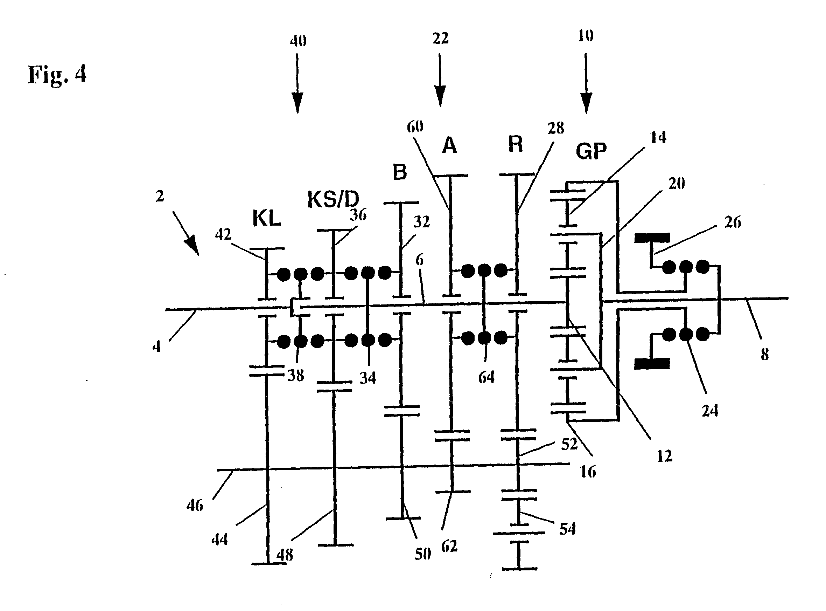

So zeigt die Fig. 4 ein 10-Gang-Getriebe, das ein zusätzliches Zahnradpaar gegenüber dem Getriebe nach der Fig. 1 aufweist. Das zusätzliche Zahnradpaar besteht aus dem lose auf der Hauptwelle 6 drehbaren Zahnrad 60 und dem fest mit der Vorgelegewelle verbundenen Zahnrad 62. Zur drehfesten Verbindung der Zahnräder 60 und 28 mit der Hauptwelle 6 ist eine geänderte Schalteinrichtung 64 vorgesehen.

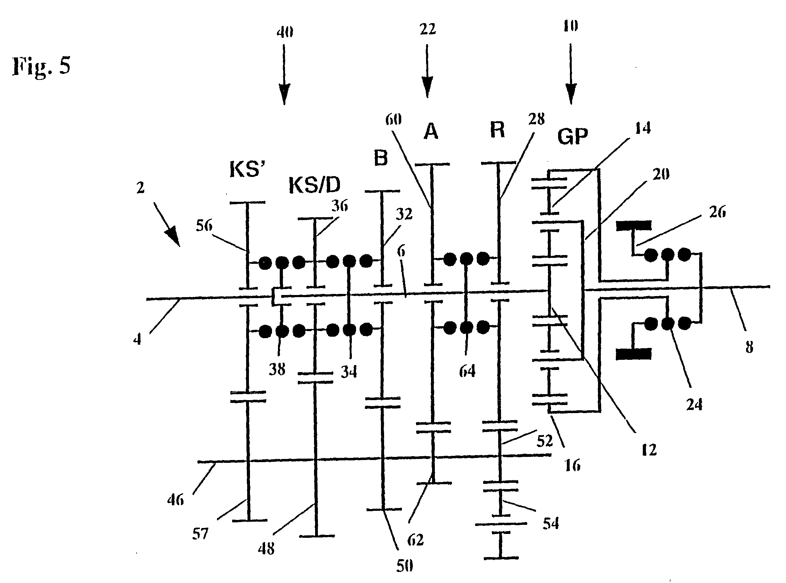

So zeigt die Fig. 5 ein 10-Gang-Getriebe in einer Schnellgangvariante, das ein zusätzliches Zahnradpaar gegenüber dem Getriebe nach der Fig. 2 aufweist. Das zusätzliche Zahnradpaar besteht aus dem lose auf der Hauptwelle 6 drehbaren Zahnrad 60 und dem fest mit der Vorgelegewelle 46 verbundenen Zahnrad 62. Zur drehfesten Verbindung der Zahnräder 60 und 28 mit der Hauptwelle 6 ist wieder eine geänderte Schalteinrichtung 64 vorgesehen. Gegenüber der Variante, wie sie in Fig. 4 gezeigt ist, weist die Variante nach Fig. 5 eine geänderte Konstante I auf, die hier wie in Fig. 2 aus einem Zahnradpaar besteht, das die Zahnräder 56 und 57 umfaßt. Alle anderen Verzahnungen entsprechen den Verzahnungen der Grundvariante sowohl in der Direktgangvariante nach Fig. 1 als auch in der Schnellgangvariante nach Fig. 2.

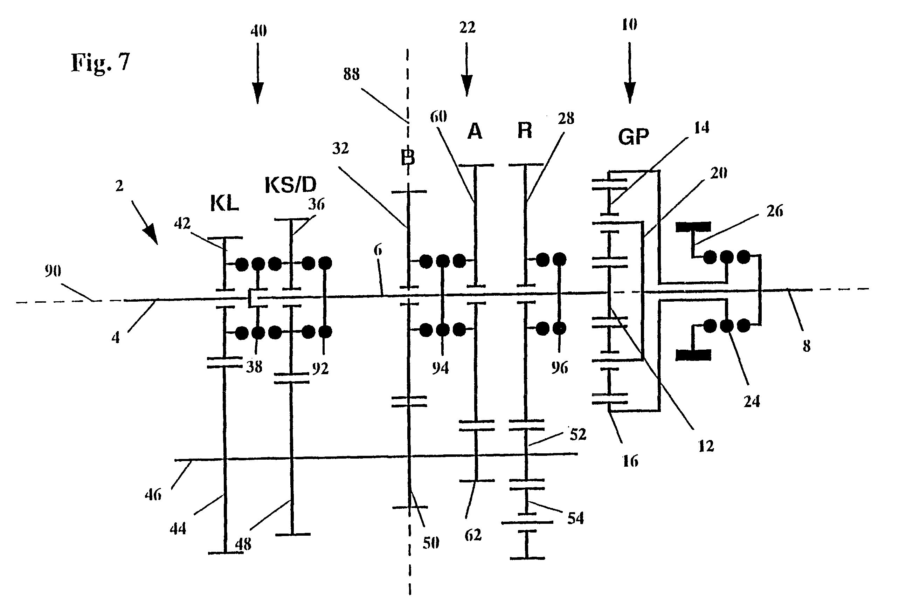

Die Fig. 6 zeigt ein Schaltbild 66 für 10-Gang-Getriebe, das für beide Varianten nach Fig. 4 und Fig. 5 gilt. In der Schalthebelstellung, die mit R1/2 bezeichnet ist, ist die Schalteinrichtung 64 aus Fig. 4 so geschaltet, daß das Zahnrad 28 für den Rückwärtsgang mit der Hauptwelle 6 drehfest verbunden ist. Die Umschaltung zwischen dem 1. und 2. Rückwärtsgang erfolgt durch die Schalteinrichtung 38 im Splittergetriebeteil 40, wobei die Schalthebelstellung in der Position R1/2 beibehalten wird. Die Vorwärtsgänge 1 und 2 liegen nach diesem Schaltbild in der gleichen Schaltgasse 74 wie die Rückwärtsgänge. Beim Wechsel in die Schaltgasse 76 wird zunächst die Schalteinrichtung 64 aus ihrer Drehmomentübertragung ausgeschaltet und anschießend in der Schaltgasse 76 durch Betätigung der Schalteinrichtung 34 entweder die Schalthebelstellung für die Gänge 5/6 oder 3/4 eingelegt. Ein Wechsel in die Schaltgasse 78 bewirkt ein Umschaltung der Schalteinrichtung 24 von einer langsamen Übersetzung in eine schnelle Übersetzung. Dazu wird in der Wählgasse 80 eine Position 82 überwunden, die eine überwiegend pneumatisch betätigte Umschaltung der Schalteinrichtung 24 bewirkt.

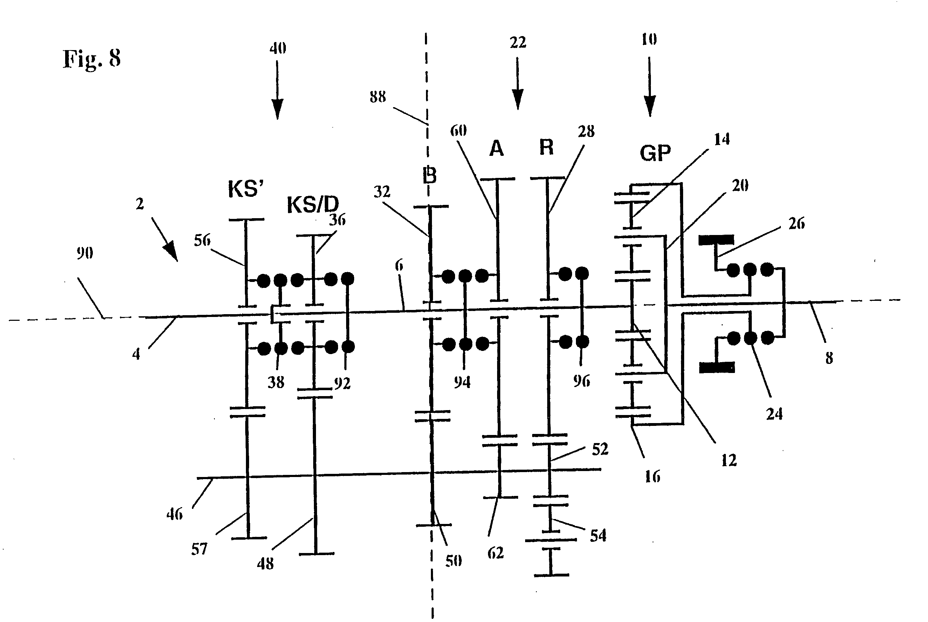

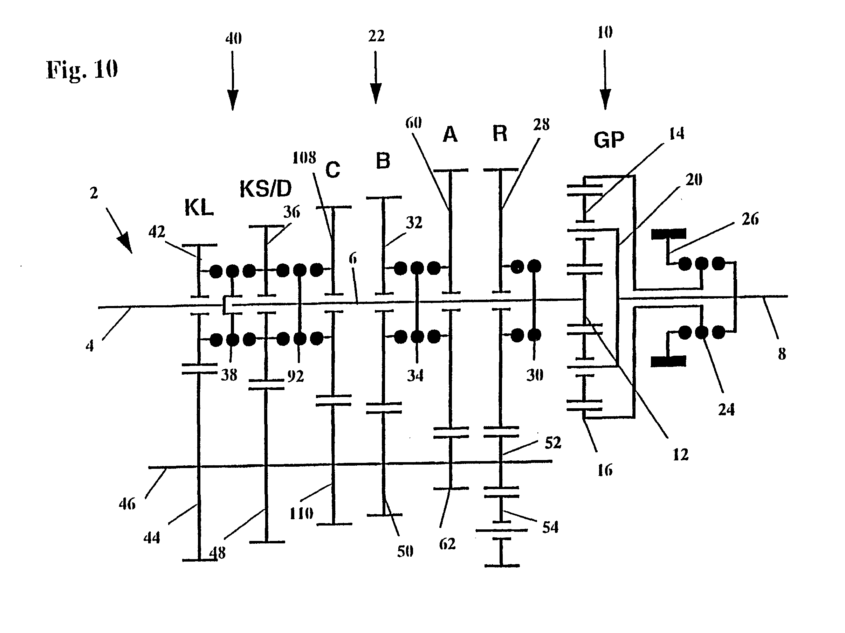

Die Fig. 7 und Fig. 8 zeigen zwei weitere Varianten eines 10-Gang-Getriebe mit einer geänderten Anordnung der Zahnradpaare, so daß in der äußeren Schaltgasse 86 nach Fig. 9 eine Schaltrichtungsumkehr vorgesehen werden muß. Die Fig. 7 benutzt die gleichen Bauteile wie die Variante in Fig. 4. Das Zahnrad 32 ist auf der Hauptwelle 6 um 180° gedreht angeordnet um eine gedachte Achse 88, die senkrecht auf der durch die Längsachse der Hauptwelle 6 gebildeten Achse 90 steht. Ebenso sind die Zahnräder 28 und 60 entsprechend um 180° gedreht. Die Schalteinrichtungen 92, 94 und 96 sind entsprechend verändert. Die Betätigung der jeweiligen Schalteinrichtungen in den einzelnen Figuren nach rechts entspricht der Bewegung in eine Schalthebelposition in dem jeweilig zugehörigen Schaltbild nach oben aus der jeweiligen Wählgasse. Die Fig. 9 zeigt ein solches Schaltbild 98 für 10-Gang-Getriebe, das für beide Varianten nach Fig. 7 und Fig. 8 gilt. In der Schalthebelstellung, die mit R1/2 bezeichnet ist, ist die Schalteinrichtung 96 aus Fig. 7 so geschaltet, daß das Zahnrad 28 für den Rückwärtsgang mit der Hauptwelle 6 drehfest verbunden ist. Dafür wird die Schalteinrichtung 96 nach links in der Fig. 7 bewegt. Die Umschaltung zwischen dem 1. und 2. Rückwärtsgang erfolgt durch die Schalteinrichtung 38 im Splittergetriebeteil 40, wobei die Schalthebelstellung in der Position R1/2 beibehalten wird. Die Vorwärtsgänge 1 und 2 liegen nach diesem Schaltbild in der gleichen Schaltgasse 100 wie die Gänge 3 und 4 entsprechend dem Schaltbild 58 in der Fig. 3. Beim Wechsel in die Schaltgasse 100 wird zunächst die Schälteinrichtung 96 aus ihrer Drehmomentübertragung ausgeschaltet und anschießend in der Schaltgasse 100 durch Betätigung der Schalteinrichtung 94 entweder die Schalthebelstellung für die Gänge 1/2 oder für die Gänge 3/4 eingelegt. Ein Wechsel in die Schaltgasse 102 bewirkt eine Umschaltung der Schalteinrichtung 24 von einer langsamen Übersetzung in eine schnelle Übersetzung. Dazu wird in der Wählgasse 104 eine Position 82 überwunden, die eine Umschaltung der vorwiegend pneumatisch betätigten Schalteinrichtung 24 bewirkt. In der Schaltgasse 102 werden die Schaltpositionen 5/6 und 7/8 der entsprechenden Gänge 5, 6, 7 und 8 erreicht. Ein Weiterbewegen im Schaltbild 98 nach rechts führt zu einer Schaltgasse 106, in der die Schalthebelposition für die Gänge 9 und 10 liegt. Wird der Schalthebel in der Schaltgasse 100 von oben nach unten geführt, entspricht dies einer Schaltbewegung der Schalteinrichtung 94 von rechts nach links in den Fig. 7 und Fig. 8. Eine Bewegung des Schalthebels aus der Position 3/4 in Schaltgasse 100 zu der Position 5/6 in der Schaltgasse 102 entspricht einer Bewegung der Schalteinrichtung 94 von links nach rechts in den Fig. 7 und 8. Dadurch, daß nach Überwindung der Position 82 eine Umschaltung des Planetengetriebes stattgefunden hat, wird nicht die gleiche Getriebeübersetzung erreicht wie vorher trotz der Einschaltung des gleichen Zahnrades 60 in die Drehmomentübertragung. Da beim Erreichen der Schalthebelposition 9/10 gegenüber der Wählgasse 104 einerseits eine der Position R1/2 entgegengelegene Position eingenommen wird, andererseits aber die Schalteinrichtung 92 zur Verbindung des Zahnrades 36 mit der Hauptwelle 6 nach links in den Fig. 7 und 8 verschoben werden muß, ist eine Umkehrung der Schalthebelbewegungsrichtung in der Schaltgasse 106 erforderlich. Die dazu erforderlichen Maßnahmen sind aber nicht Gegenstand dieser Erfindung.

Die Fig. 8 zeigt die der Fig. 7 entsprechende Ausgestaltung für eine Schnellgangvariante des 10-Gang-Getriebes nach Fig. 5.

Die Fig. 10 zeigt eine Variante eines 12-Gang-Getriebes, bei der gegenüber der Variante nach Fig. 7 ein weiteres Zahnradpaar hinzugekommen ist. Das zusätzliche Zahnradpaar besteht aus dem lose auf der Hauptwelle 6 drehbaren Zahnrad 108 und dem fest mit der Vorgelegewelle 46 verbundenen Zahnrad 110. Zur drehfesten Verbindung der Zahnräder 108 und 36 mit der Hauptwelle 6 ist eine geänderte Schalteinrichtung 92 vorgesehen.

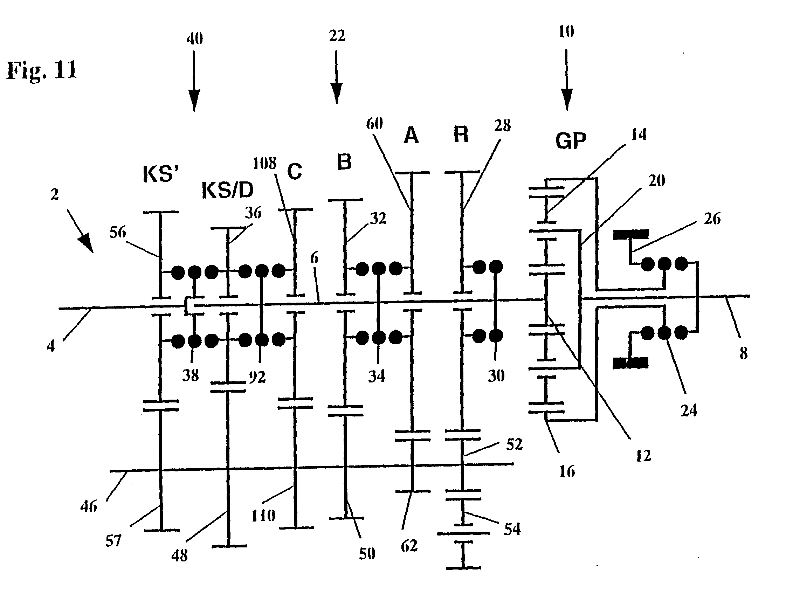

Die Fig. 11 zeigt ein 12-Gang-Getriebe in einer Schnellgangvariante, das ein zusätzliches Zahnradpaar gegenüber dem Getriebe nach der Fig. 8 aufweist. Das zusätzliche Zahnradpaar besteht aus dem lose auf der Hauptwelle 6 drehbaren Zahnrad 108 und dem fest mit der Vorgelegewelle 46 verbundenen Zahnrad 110. Zur drehfesten Verbindung der Zahnräder 108 und 36 mit der Hauptwelle 6 ist wieder eine geänderte Schalteinrichtung 92 vorgesehen. Gegenüber der Variante, wie sie in Fig. 10 gezeigt ist, weist die Variante nach Fig. 11 eine geänderte Konstante I auf, die hier wie in Fig. 2 aus einem Zahnradpaar besteht, das die Zahnräder 56 und 57 umfaßt. Alle anderen Verzahnungen entsprechen den Verzahnungen der Grundvariante sowohl in der Direktgangvariante nach Fig. 1 als auch in der Schnellgangvariante nach Fig. 2.

Die Fig. 12 zeigt ein Schaltbild 114 für ein 12-Gang-Getriebe. Gegenüber dem Schaltbild von Fig. 9 ist in der Schaltgasse 106 eine zusätzliche Schaltposition 10/12 vorgesehen. Beim Bewegen des Schalthebels in diese Position wird die Schalteinrichtung 92 nach Fig. 10 oder 11 nach links bewegt, so daß eine Verbindung zwischen Zahnrad 36 und Hauptwelle 6 erzielt wird. Das Schaltbild 114 gilt für die beiden Varianten nach Fig. 10 und Fig. 11.

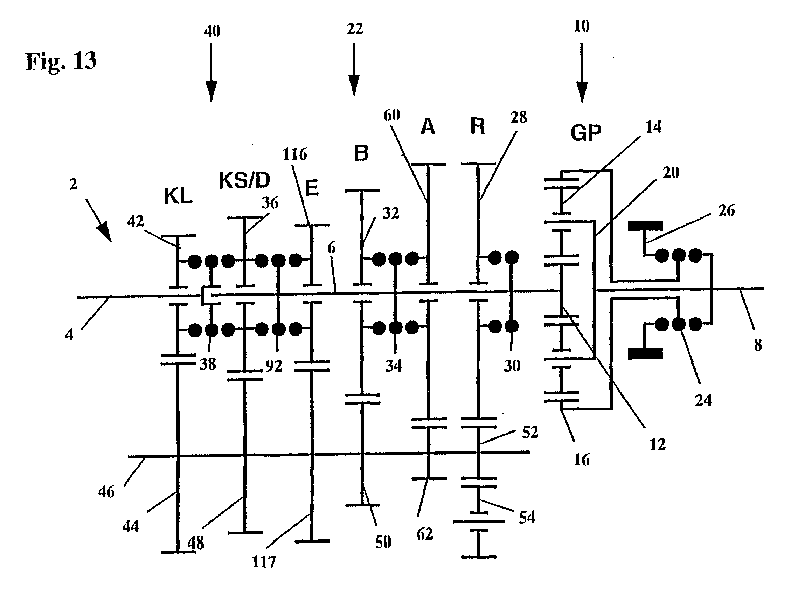

Die Fig. 13 zeigt eine weitere Schnellgangvariante für ein 12-Gang-Getriebe, bei dem gegenüber der Direktgangvariante aus Fig. 10 nicht das Zahnradpaar der Konstante I, bestehend aus den Zahnrädern 42 und 44, sondern die beiden Zahnräder 108 und 110 ersetzt werden durch die beiden Zahnräder 116 und 117. Dieses Radpaar 116 - 117 ist um einen ganzen Übersetzungsstufensprung schneller als das ursprüngliche Radpaar. Dadurch läßt sich unter Beibehaltung von Konstante I und Konstante II aus der Direktgangvariante eine Schnellgangvariante erzielen, welche eine um einen halben Übersetzungsstufensprung höhere Gesamtspreizung aufweist.

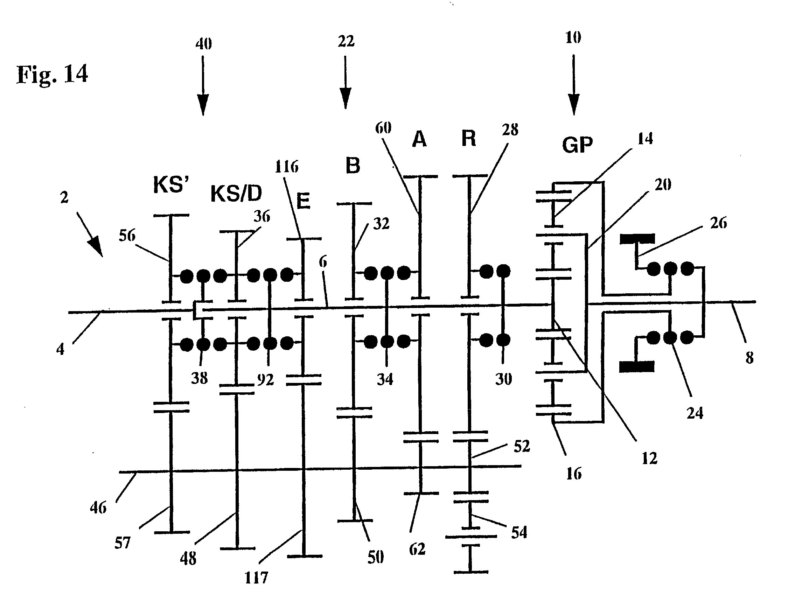

Die Fig. 14 zeigt eine weitere Schnellgangvariante für ein 12-Gang-Getriebe mit einer geänderten Konstante I gegenüber Fig. 13. Gegenüber der Schnellgangvariante aus Fig. 11 sind hier nur die Zahnräder 108 und 110 gegen die Zahnräder 116 und 117 getauscht, welche eine um einen halben Übersetzungsstufensprung höhere Gesamtspreizung aufweisen.

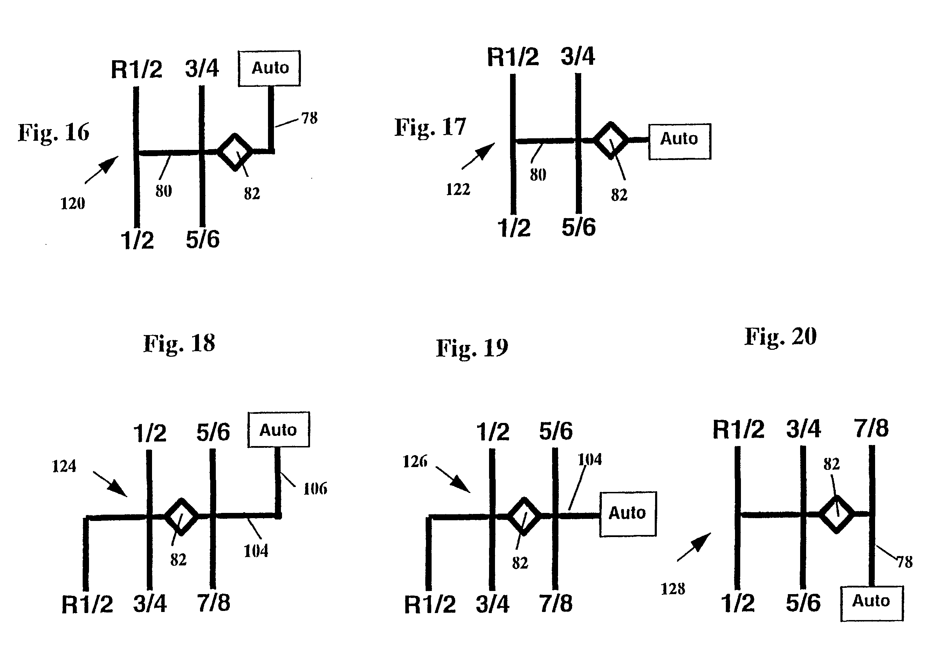

Im Schaltbild 114 nach Fig. 12 wird bei Erreichen der höchsten Schaltposition 10/12 die Schalteinrichtung 92 nach links in Fig. 10 und Fig. 11 verschoben. Beim Schaltbild 118 nach Fig. 15, das für die Schnellgangvarianten aus Fig. 13 und Fig. 14 gilt, muß jedoch die Schalteinrichtung 92 nach rechts in Fig. 13 und Fig. 14 verschoben werden, weil die höchsten Übersetzungen unter Einschaltung von Zahnrad 116 erzielt werden. Soll die Anordnung der Schaltpositionen aus Schaltbild 114 auch in Schaltbild 118 erhalten bleiben, muß in der Schaltgasse 106 in Schaltbild 118 eine Schaltrichtungsumkehr ähnlich Fig. 9 stattfinden. Die dazu erforderlichen Maßnahmen sind aber nicht Gegenstand dieser Erfindung.

Die Fig. 16 und Fig. 17 zeigen zwei Schaltbilder 120 und 122 für ein Getriebe mit einer Teilautomatisierung der Gänge oberhalb des 6. Ganges. Die Schaltbilder 120 und 122 sind für 10-Gang-Varianten benutzbar. In der Wählgasse 80 wird beim Wählen eine Position 82 überwunden und eine Schaltposition AUTO erreicht, die im Schaltbild 122 am rechten Ende der Wählgasse 80 liegt. Im Schaltbild 120 liegt diese Schaltposition am oberen Ende Schaltgasse 78. In der Schaltposition AUTO werden alle Schaltungen nicht mehr durch Verändern der Schaltpositionen mittels Schalthebel herbeigeführt, sondern von einer Rechnereinheit werden die höheren Gänge innerhalb zulässiger Grenzen automatisch geschaltet.

Die Fig. 18 und Fig. 19 zeigen Schaltbilder 124 und 126 entsprechend der Schaltbilder 98, 114 und 118 aus den Fig. 9, 12 und 15. Sie gelten für 10-Gang- und 12-Gang-Getriebevarianten mit einer entsprechenden Anordnung der Schaltpositionen AUTO in der Schaltgasse 106 bzw. am Ende der Wählgasse 104.

Die Fig. 20 zeigt ein Schaltbild 128 entsprechend Schaltbild 66 aus Fig. 6. Das Schaltbild 128 gilt für 10-Gang-Varianten, wobei die Schaltposition AUTO in der Schaltgasse 78 angeordnet ist.

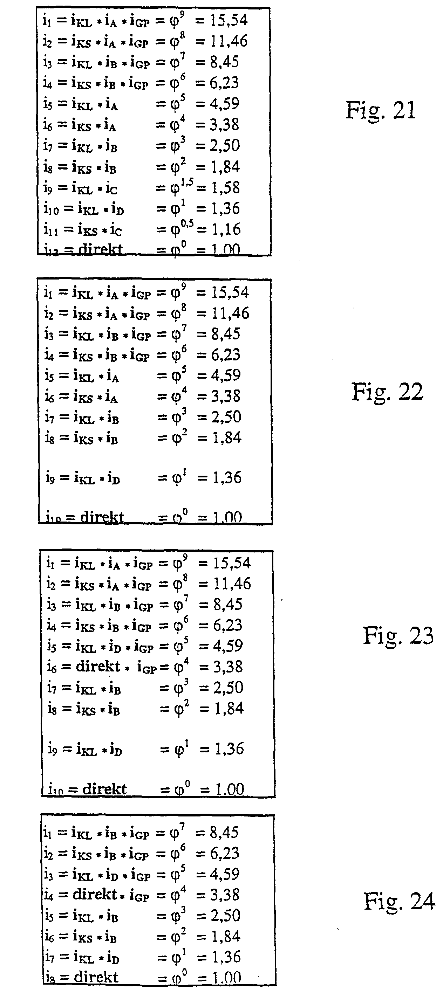

Die Fig. 21 zeigt eine beispielhafte Gestaltung der Übersetzungsreihe eines 12-Gang-Getriebes mit einem Schaltbild 114 nach Fig. 12 und einem Getriebeschema nach Fig. 10. Es ist ersichtlich, daß für die ersten vier Gänge der Gruppengetriebeteil 10 jeweils in der langsamen Übersetzungsstufe geschaltet ist. Ab dem fünften Gang wird der Gruppengetriebeteil 10 in die schnelle Übersetzungsstufe geschaltet und bleibt für die folgenden Gänge in dieser geschalteten Position, die nicht mehr verändert wird. In den Gängen fünf bis acht werden jeweils die gleichen Zahnräder 32, 36, 42 und 60 geschaltet wie in den Gängen eins bis vier nur mit der schnellen Übersetzungsstufe im Gruppengetriebeteil 10. In den Gängen neun und elf wird entweder Zahnrad 42 der Konstanten I oder Zahnrad 36 der Konstanten II sowie das Zahnrad 108 in die Drehmomentübertragung eingeschaltet. In den Gängen zehn und zwölf wird entweder Zahnrad 42 der Konstanten I und Zahnrad 36 in die Drehmomentübertragung eingeschaltet oder mit den Schalteinrichtungen 92 und 38 wird eine direkte Verbindung der Eingangswelle 4 mit der Hauptwelle 6 erreicht.

Die Fig. 22 zeigt eine beispielhafte Gestaltung der Übersetzungsreihe eines 10-Gang-Getriebes mit einem Schaltbild 98 nach Fig. 9 und einem Getriebeschema nach Fig. 7. Es ist ersichtlich, daß für die ersten vier Gänge der Gruppengetriebeteil 10 jeweils in der langsamen Übersetzungsstufe geschaltet ist. Ab dem fünften Gang wird der Gruppengetriebeteil 10 in die schnelle Übersetzungsstufe geschaltet und bleibt für die folgenden Gänge in dieser geschalteten Position, die nicht mehr verändert wird. In den Gängen fünf bis acht werden jeweils die gleichen Zahnräder 32, 36, 42 und 60 geschaltet wie in den Gängen eins bis vier nur mit der schnellen Übersetzungsstufe im Gruppengetriebeteil 10. Gegenüber der Fig. 10 fehlt in der Fig. 7 das Zahnrad 108. Deshalb entspricht hier die Übersetzung des neunten Ganges der Übersetzung des zehnten Ganges aus Fig. 21 und die Übersetzung des zehnten Ganges der Übersetzung des zwölften Ganges der Fig. 21. Hieraus ergibt sich, daß in der 12-Gang-Variante nach Fig. 21 die Übersetzung des neunten Ganges zwischen den Übersetzungen des achten und neunten Ganges der 10-Gang-Variante nach Fig. 22 liegt und die Übersetzung des elften Ganges der 12-Gang-Variante zwischen den Übersetzungen des neunten und zehnten Ganges der 10-Gang-Variante.
In den Gängen neun und zehn wird entweder Zahnrad 42 der Konstanten I und Zahnrad 36 in die Drehmomentübertragung eingeschaltet oder mit den Schalteinrichtungen 92 und 38 wird eine direkte Verbindung der Eingangswelle 4 mit der Hauptwelle 6 erreicht.

Die Fig. 23 zeigt eine weitere beispielhafte Gestaltung der Übersetzungsreihe eines 10-Gang-Getriebes mit einem Schaltbild 66 nach Fig. 6 und einem Getriebeschema nach Fig. 4. Es ist ersichtlich, daß für die ersten sechs Gänge der Gruppengetriebeteil 10 jeweils in der langsamen Übersetzungsstufe geschaltet ist. In den Gängen fünf und sechs wird entweder Zahnrad 42 der Konstanten I und Zahnrad 36 in die Drehmomentübertragung eingeschaltet oder mit den Schalteinrichtungen 34 und 38 wird eine direkte Verbindung der Eingangswelle 4 mit der Hauptwelle 6 erreicht.
Ab dem siebten Gang wird der Gruppengetriebeteil 10 in die schnelle Übersetzungsstufe geschaltet und bleibt für die folgenden Gänge in dieser geschalteten Position, die nicht mehr verändert wird. In den Gängen sieben bis zehn werden jeweils die gleichen Zahnräder 32, 36, und 42 geschaltet wie in den Gängen drei bis sechs nur mit der schnellen Übersetzungsstufe im Gruppengetriebeteil 10.
Gegenüber der Fig. 10 fehlt in der Fig. 4 das Zahnrad 108. Deshalb entspricht hier die Übersetzung des neunten Ganges der Übersetzung des zehnten Ganges aus Fig. 21 und die Übersetzung des zehnten Ganges der Übersetzung des zwölften Ganges der Fig. 21. Hieraus ergibt sich, daß in der 12-Gang-Variante nach Fig. 21 die Übersetzung des neunten Ganges zwischen den Übersetzungen des achten und neunten Ganges der 10-Gang-Variante nach Fig. 23 liegt und die Übersetzung des elften Ganges der 12-Gang-Variante zwischen den Übersetzungen des neunten und zehnten Ganges der 10-Gang-Variante.

Die Fig. 24 zeigt eine beispielhafte Gestaltung der Übersetzungsreihe eines 8-Gang-Getriebes mit einem Schaltbild 58 nach Fig. 3 und einem Getriebeschema nach Fig. 1. Es ist ersichtlich, daß für die ersten vier Gänge der Gruppengetriebeteil 10 jeweils in der langsamen Übersetzungsstufe geschaltet ist. In den Gängen drei und vier wird entweder Zahnrad 42 der Konstanten I und Zahnrad 36 in die Drehmomentübertragung eingeschaltet oder mit den Schalteinrichtungen 34 und 38 wird eine direkte Verbindung der Eingangswelle 4 mit der Hauptwelle 6 erreicht.
Ab dem fünften Gang wird der Gruppengetriebeteil 10 in die schnelle Übersetzungsstufe geschaltet und bleibt für die folgenden Gänge in dieser geschalteten Position, die nicht mehr verändert wird. In den Gängen fünf bis acht werden jeweils die gleichen Zahnräder 32, 36 und 42 geschaltet wie in den Gängen eins bis vier, nur mit der schnellen Übersetzungsstufe im Gruppengetriebeteil 10.

### Bezugszeichen

- 2: Getriebe
- 4: Eingangswelle
- 6: Hauptwelle
- 8: Abtriebswelle
- 10: Gruppengetriebeteil
- 12: Sonnenrad
- 14: Planetenräder
- 16: Hohlrad
- 20: Planetenträger
- 22: Hauptgetriebeteil
- 24: Schalteinrichtung
- 26: Gehäuse
- 28: Rückwärtsgangzahnrad
- 30: Schalteinrichtung
- 32: Zahnrad
- 34: Schalteinrichtung
- 36: Zahnrad
- 38: Schalteinrichtung
- 40: Splittergetriebeteil
- 42: Zahnrad
- 44: Zahnrad
- 46: Vorgelegewelle
- 48: Zahnrad
- 50: Zahnrad
- 52: Zahnrad
- 54: Rückwärtsgangrad
- 56: Zahnrad
- 57: Zahnrad
- 58: Schaltbild
- 60: Zahnrad
- 62: Zahnrad
- 64: Schalteinrichtung
- 66: Schaltbild
- 68: Schaltgasse
- 70: Schaltgasse
- 72: Wählgasse
- 74: Schaltgasse
- 75: Position
- 76: Schaltgasse
- 78: Schaltgasse
- 80: Wählgasse
- 82: Position
- 86: Schaltgasse
- 88: Achse
- 90: Achse
- 92: Schalteinrichtung
- 94: Schalteinrichtung
- 96: Schalteinrichtung
- 98: Schaltbild
- 100: Schaltgasse
- 102: Schaltgasse
- 104: Wählgasse
- 106: Schaltgasse
- 108: Zahnrad
- 110: Zahnrad
- 114: Schaltbild
- 116: Zahnrad
- 117: Zahnrad
- 118: Schaltbild
- 120: Schaltbild
- 122: Schaltbild
- 124: Schaltbild
- 126: Schaltbild
- 128: Schaltbild

## Patentansprüche

1. Getriebebaureihe mit Bauformen von Getrieben (2) mit unterschiedlicher Gesamtübersetzung oder einer unterschiedlichen Anzahl an Übersetzungsstufen für Fahrzeuge , die aus drei hintereinander angeordneten Teilgetrieben (10,22,40) mit
- einem Hauptgetriebe (22),
- einem mehrgängigen Splitgetriebe (40) mit Konstanten (KL/KS', KS/D) und
- einem mehrgängigen Gruppengetriebe (10) bestehen,
**dadurch gekennzeichnet, daß**
- eine der Konstanten (KS/D) des Splitgetriebes (40) und das Gruppengetriebe (10) bei allen Bauformen gleich sind, und
- diejenigen Gangstufen jedes Hauptgetriebes bei allen Bauformen an allen Zahnrädern die gleiche Zähnezahl bei wenigsten denjenigen Zahnradpaarungen (28-52-54, 32-50, 36-48) aufweisen, die den Zahnradpaarungen (28-52-54, 32-50, 36-48) der Bauform des Getriebes (2) mit der geringsten Anzahl an Übersetzungsstufen entspricht.

2. Getriebebaureihe nach Anspruch 1, **dadurch gekennzeichnet, daß** zur Bildung einer Schnellgangvariante aus einer Direktgangvariante ein Radsatz (42 - 44) einer anderen Konstanten durch einen um zwei Übersetzungsstufensprünge schnelleren Radsatz (56 - 57) ersetzt ist und die weiteren Radpaare des Getriebes gleich bleiben.

3. Getriebebaureihe nach Anspruch 1, **dadurch gekennzeichnet, daß** zur Bildung einer Schnellgangvariante eines Getriebes bei gleicher Anzahl der Übersetzungsstufen aus einer Direktgangvariante ein Radpaar (108 - 110, 116 - 117) des Hauptgetriebes gewechselt wird, das nicht ein Radpaar einer Konstanten darstellt und die weiteren Radpaare des Getriebes gleich bleiben.

4. Getriebebaureihe nach Anspruch 1, **dadurch gekennzeichnet, daß** zur Bildung einer Schnellgangvariante eines Getriebes mit einer um zwei Übersetzungsstufen erhöhten Anzahl von Übersetzungsstufen ein Radpaar (108 - 110, 116 - 117) des Hauptgetriebes hinzugefügt wird, das nicht ein Radpaar einer Konstanten darstellt und die weiteren Radpaare des Getriebes gleich bleiben.

5. Getriebebaureihe nach Anspruch 4, **dadurch gekennzeichnet, daß** zur Bildung einer Schnellgangvariante eines Getriebes mit einer um zwei Übersetzungsstufen erhöhten Anzahl von Übersetzungsstufen aus einer Direktgangvariante ein Radpaar (116 - 117) des Hauptgetriebes hinzugefügt wird, das nicht ein Radpaar einer Konstanten darstellt und die weiteren Radpaare des Getriebes gleich bleiben.

6. Getriebebaureihe nach einem der vorherigen Ansprüche, **dadurch gekennzeichnet, daß** bei Handschaltung des Getriebes zur Änderung der Schalthebelpositionen eines Schaltbildes (66, 98) wenigstens ein Zahnrad (28, 32, 60) des Hauptgetriebes (22) auf der gleichen Welle (6) um 180 Grad um eine gedachte Achse (88) gedreht angeordnet ist und die gedachte Achse (88) rechtwinklig zu einer Längsachse (90) der Welle ausgebildet ist.

7. Getriebebaureihe nach einem der vorherigen Ansprüche, **dadurch gekennzeichnet, daß** bei einem 12-Gang-Getriebe die Übersetzungsstufen 1 bis 8 und die Rückwärtsgänge von Hand schaltbar sind und die Übersetzungsstufen 9 bis 12 automatisiert schaltbar sind und im Schaltbild (124, 126) des Getriebes eine Schalthebelstellung (AUTO) vorgesehen ist, die das Einleiten eines automatisierten Schaltmodus kennzeichnet.

8. Getriebebaureihe nach einem der Ansprüche 1 bis 6, **dadurch gekennzeichnet, daß** bei einem 10-Gang-Getriebe die Übersetzungsstufen 1 bis 8 und die Rückwärtsgänge von Hand schaltbar sind und die Übersetzungsstufen 9 und 10 automatisiert schaitbar sind und im Schaltbild (124, 126, 128) des Getriebes eine Schalthebelstellung (AUTO) vorgesehen ist, die das Einleiten eines automatisierten Schaltmodus kennzeichnet.

9. Getriebebaureihe nach einem der Ansprüche 1 bis 6, **dadurch gekennzeichnet, daß** bei einem 10-Gang-Getriebe die Übersetzungsstufen 1 bis 6 und die Rückwärtsgänge von Hand schaltbar sind und die Übersetzungsstufen 7 bis 10 automatisiert schaltbar sind und im Schaltbild (120, 122) des Getriebes eine Schalthebelstellung vorgesehen ist, die das Einleiten eines automatisierten Schaltmodus (AUTO) kennzeichnet.

10. Getriebebaureihe nach einem der Ansprüche 7 bis 9, **dadurch gekennzeichnet, daß** die Schalthebelstellung für den automatisierten Schaltmodus (AUTO) in einem H- bzw. HH-Schaltbild (122, 126) am äußeren rechten Ende der Wählgasse (80, 104) liegt.

11. Getriebebaureihe nach einem der Ansprüche 7 bis 9, **dadurch gekennzeichnet, daß** die Schalthebelstellung für den automatisierten Schaltmodus (AUTO) in einem H- bzw. HH-Schaltbild (120, 124, 128) am Ende einer äußeren rechten Schaltgasse (78, 106) liegt.

12. Getriebebaureihe nach Anspruch 10 oder 11, **dadurch gekennzeichnet, daß** die Schalthebelstellung für den automatisierten Schaltmodus (AUTO) in einem H- bzw. HH-Schaltbild am äußeren rechten Ende der Wählgasse (80, 104) oder am Ende einer äußeren rechten Schaltgasse (78, 106) liegt und vor Erreichen dieser Schalthebelstellung eine Position (82) vorgesehen ist, die eine Schaltung der Bereichsgruppe bewirkt.

13. Getriebebaureihe nach einem der vorherigen Ansprüche, **dadurch gekennzeichnet, daß** die 12-Gang-Variante gegenüber der 10-Gang-Variante eine zusätzliche Zahnradpaarung (108 - 110) aufweist, die so gestaltet ist, daß beim 12-Gang-Getriebe die Übersetzung des neunten Ganges einen halben Übersetzungssprung φ^{0.5} schneller ist als die Übersetzung des achten Ganges der 10-Gang-Variante und die Übersetzung des elften Ganges einen halben Übersetzungssprung schneller ist als die Übersetzung des neunten Ganges der 10-Gang-Variante.

14. Getriebebaureihe nach einem der vorherigen Ansprüche 1 bis 12, **dadurch gekennzeichnet, daß** die 12-Gang-Variante gegenüber der 10-Gang-Variante eine zusätzliche Zahnradpaarung (116 - 117) aufweist, die so gestaltet ist, daß beim 12-Gang-Getriebe die Übersetzung des zehnten Ganges einen halben Übersetzungssprung φ^{0.5} schneller ist als die Übersetzung des neunten Ganges der 10-Gang-Variante und die Übersetzung des zwölften Ganges einen halben Übersetzungssprung schneller ist als die Übersetzung des zehnten Ganges der 10-Gang-Variante.

15. Getriebebaureihe nach einem der vorherigen Ansprüche, **dadurch gekennzeichnet, daß** in den Teilgetrieben (10, 40) jeweils eine unterschiedliche Anzahl identischer Vorgelegewellen vorgesehen ist, wobei die Radpaare der Zahnräder bei Getrieben (2) mit unterschiedlichen Drehmomentkapazitäten gleiche Verzahnungsbreiten aufweisen und die Gehäuse und Schaltungen gleich sind.

## Claims

1. Transmission range consisting of transmission versions (2) with different total ratios or different numbers of reduction stages for vehicles consisting of three tandem transmissions (10, 22, 40) comprising
- one main transmission (22),
- one multispeed splitter transmission (40) with constant ratio gears (KL/KS, KS/D) and
- one multispeed range transmission (10),
**characterized in that**
- one of the constant ratio gears (KS/D) of the splitter transmission (40) and the range transmission (10) are the same for all versions and
- those gear steps of each main transmission of any version on all gears have the same number of teeth at least on those gear pairs (28-52-54, 32-50, 36-48) which correspond to the gear pairs (28-52-54, 32-50, 36-48) of the transmission version (2) with the lowest number of reduction stages.

2. Transmission range according to claim 1,
**characterized**
**in that** for turning a direct gear variant into an overdrive variant a gear set (42 - 44) of an other constant is replaced by a gear set ( 56 -57) which is two reduction ratios faster and the other gear pairs of the transmission remain the same.

3. Transmission range according to claim 1,
**characterized**
**in that** for turning a direct gear variant into and overdrive variant, with the number of reduction stages remaining the same, one gear pair (108 - 110, 116 -117) of the main transmission, which is not a gear pair of a constant, is exchanged and the other gear pairs of the transmission remain the same.

4. Transmission range according to claim 1,
**characterized**
**in that** for obtaining an overdrive variant of a transmission with two added reduction ratios, one gear pair (108 -110, 116 -117) from the main transmission, which is not a gear pair of a constant, is added and the other gear pairs of the transmission remain the same.

5. Transmission range according to claim 4,
**characterized**
**in that** for turning a direct gear variant into and overdrive variant with two additional reduction ratios, one gear pair (116 - 117) from the main transmission is added, which is not a gear pair of a constant, and the other gear pairs of the transmission remain the same.

6. Transmission range according to one of the preceding claims,
**characterized**
**in that** for manual change of the shift lever position of a shifting pattern (66, 98) at least one gear (28, 32, 60) of the main transmission (22) on the same shaft (6) is turned by 180 degrees around an imaginary axis (88) and the imaginary axis (88) forms a right angle to a longitudinal axis (90) of the shaft.

7. Transmission range according to one of the preceding claims,
**characterized**
**in that** in a 12-speed transmission the reduction ratios 1 to 8 and the reverse gears are manually shiftable and the reduction ratios 9 to 12 are automatically shiftable, and that the shifting pattern (124 ,126) of the transmission features a shift lever position (AUTO) which indicates the initiation of an automated shifting mode.

8. Transmission range according to one of the claims 1 to 6,
**characterized**
**in that** in a 10-speed transmission the reduction ratios 1 to 8 and the reverse gears are manually shiftable and the reduction ratios 9 and 10 are automated, and that the shifting pattern (124, 126, 128) of the transmission features a shift lever position (AUTO) which indicates the initiation of an automated shifting mode.

9. Transmission range according to one of the claims 1 to 6,
**characterized**
**in that** in a 10-speed transmission the reduction stages 1 to 6 and the reverse gears are manually shiftable and the reduction stages 7 to 10 are automated, and that the shifting pattern (120, 122) of the transmission features a shift lever position (AUTO) which indicates the initiation of an automated shifting mode (AUTO).

10. Transmission range according to one of the claims 7 to 9,
**characterized**
**in that** the shift lever for the automated shifting mode (AUTO) is positioned in an H or HH shifting pattern (122, 126) at the outer, right-side end of the gate pattern (80, 104).

11. Transmission range according to one of the claims 7 to 9,
**characterized**
**in that** the shift lever for the automated shifting mode (AUTO) is positioned in an H or HH shifting pattern (120, 124, 128) at the end of an outer, right-hand gate (78, 106).

12. Transmission range according to claim 10 or 11,
**characterized**
**in that** the shift lever for the automated shifting mode (AUTO) is positioned in an H or HH shifting pattern at the outer right-hand end of the gate (80, 104) or at the end of an outer, right-hand gate (78, 106) and that prior to the lever reaching this position, a position (82) is provided which effects shifting of the range group.

13. Transmission range according to one of the preceding claims,
**characterized**
**in that** the 12-speed variant compared to the 10-speed variant has an additional gear pair (108 - 110), which is designed in a manner that in the 12-speed variant the ratio of the 9^{th} gear is half a ratio ⌀^{o.5} faster than the ratio of the 8^{th} gear of the 10-speed variant and the ratio of the 11^{th} gear is half a ratio faster than the ratio of the 9^{th} gear of the 10-speed variant.

14. Transmission range according to one of the preceding claims 1 to 12,
**characterized**
**in that** the 12-speed variant compared to the 10-speed variant has an additional gear pair (116 - 117), which is designed in a manner that in the 12-speed variant the ratio of the 10^{th} gear is half a ratio ⌀^{o.5} faster than the ratio of the 9^{th} gear of the 10-speed variant and the ratio of the 12^{th} gear is half a ratio faster than the ratio of the 10^{th} gear of the 10-speed variant.

15. Transmission range according to one of the preceding claims,
**characterized**
**in that** in each part transmission (10, 40) a different number of identical countershafts is deposed, with the gear pairs of the gears of transmissions (2) with differing torque capacities having the same gear width and the housings and gearshift systems being identical.

## Revendications

1. Gamme de boîtes de vitesses comprenant plusieurs variantes de boîtes de vitesses (2), dont chacune est dotée d'une démultiplication totale ou d'un nombre d'étages de démultiplication différents, sachant que ces boîtes sont conçues pour des véhicules dotés de trois BV partielles (10, 22, 40) disposées l'une après l'autre, et qu'elles sont composées d'une boîte de base (22), d'un doubleur de gamme à plusieurs rapports (40) doté de pignons de commande (KL/KS', KS/D) et d'un groupe-relais à plusieurs rapports (10), **caractérisée en ce que** un des pignons de commande (KS/D) du doubleur de gamme (40) et le groupe-relais (10) soient identiques pour toutes les variantes de BV et **en ce que** les rapports de chaque boîte de base de chacune des variantes présentent - au moins pour les couples d'engrenages (28-52-54, 32-50, 36-48) qui correspondent aux couples d'engrenages (28-52-54, 32-50, 36-48) de la variante de boîte de vitesses (2) ayant le nombre plus petit d'étages de démultiplication ― sur tous les pignons un nombre de dents identique.

2. Gamme de boîtes de vitesses selon la revendication 1, **caractérisée en ce que** pour la réalisation d'une variante overdrive à partir d'une variante à prise directe, un train d'engrenages (42-44) d'un autre pignon de commande soit remplacé par un train d'engrenages plus rapide de deux sauts de vitesse de démultiplication (56-57) et **en ce que** les autres trains d'engrenages de la boîte de vitesses restent inchangés.

3. Gamme de boîtes de vitesses selon la revendication 1, **caractérisée en ce que** pour la réalisation d'une variante overdrive d'une boîte de vitesses à partir d'une variante à prise directe, en gardant le même nombre d'étages de démultiplication, l'on changera un train d'engrenages (108-110, 116-117) de la boîte de base, n'étant pas un train d'engrenages d'un pignon de commande, et **en ce que** les autres trains d'engrenages de la boîte de vitesses restent inchangés.

4. Gamme de boîtes de vitesses selon la revendication 1, **caractérisée en ce que** pour la réalisation d'une variante overdrive d'une boîte de vitesses comportant deux étages de démultiplication supplémentaires, l'on ajoutera un train d'engrenages (108-110, 116-117) de la boîte de base, qui ne soit pas un train d'engrenages d'un pignon de commande, et **en ce que** les autres trains d'engrenages de la boîte de vitesses restent inchangés.

5. Gamme de boîtes de vitesses selon la revendication 4, **caractérisée en ce que** pour la réalisation d'une variante overdrive d'une boîte de vitesses, comportant deux étages de démultiplication supplémentaires, à partir d'une variante à prise directe, l'on ajoutera un train d'engrenages (116-117) de la boîte de base qui ne soit pas un train d'engrenages d'un pignon de commande, et **en ce que** les autres trains d'engrenages de la boîte de vitesses restent inchangés.

6. Gamme de boîtes de vitesses selon une des revendications précédentes, **caractérisée en ce que** en cas d'une commande manuelle de la boîte de vitesses pour changer les positions du levier de commande dans une grille de commande (66, 98), au moins un pignon (28, 32, 60) de la boîte de base (22) soit logé sur le même arbre (6) tourné de 180° autour d'un axe imaginaire (88) et **en ce que** l'axe imaginaire (88) soit orienté perpendiculairement par rapport à un axe longitudinal (90) de l'arbre.

7. Gamme de boîtes de vitesses selon une des revendications précédentes, **caractérisée en ce que** pour une boîte de vitesses à 12 rapports, les étages de démultiplication 1-8 et les marches arrière puissent être engagés manuellement et **en ce que** les étages de démultiplication 9-12 puissent être engagés automatiquement et **en ce que** dans la grille de commande (124, 126) de la boîte de vitesses soit prévue la position de levier de vitesses (AUTO), identifiant l'activation du mode de commande automatique.

8. Gamme de boîtes de vitesses selon une des revendications 1-6, **caractérisée en ce que** pour une boîte de vitesses à 10 rapports, les étages de démultiplication 1-8 et les marches arrière puissent être engagés manuellement et **en ce que** les étages de démultiplication 9 et 10 puissent être engagés automatiquement, et **en ce que** dans la grille de commande (124, 126, 128) de la boîte de vitesses soit prévue la position de levier de vitesses (AUTO), identifiant l'activation du mode de commande automatique.

9. Gamme de boîtes de vitesses selon une des revendications 1-6, **caractérisée en ce que** pour une boîte de vitesses à 10 rapports, les étages de démultiplication 1-6 et les marches arrière puissent être engagés manuellement et **en ce que** les étages de démultiplication 7-10 puissent être engagés automatiquement, et **en ce que** dans la grille de commande (124, 122) de la boîte de vitesses soit prévue la position de levier de vitesses (AUTO), identifiant l'activation du mode de commande automatique.

10. Gamme de boîtes de vitesses selon une des revendications 7-9, **caractérisée en ce que** la position du levier de vitesses pour le mode de commande automatique (AUTO) se trouve dans une grille à simple H ou à double H (122, 126) et plus particulièrement à l'extrémité extérieure droite du couloir de sélection (80, 104).

11. Gamme de boîtes de vitesses selon une des revendications 7-9, **caractérisée en ce que** la position du levier de vitesses pour le mode de commande automatique (AUTO) se trouve dans une grille à simple H ou à double H (122, 124, 128) et plus particulièrement à l'extrémité extérieure droite d'un couloir de sélection (78, 106).

12. Gamme de boîtes de vitesses selon une des revendications 10 ou 11, **caractérisée en ce que** la position du levier de vitesses pour le mode de commande automatique (AUTO) se trouve dans une grille à simple H ou à double H (122, 126) et plus particulièrement à l'extrémité extérieure droite du couloir de sélection (80, 104) ou à l'extrémité extérieure droite d'un couloir de sélection (78, 106) et **en ce que**, avant d'atteindre cette position, soit prévue une autre position (82) permettant l'enclenchement du groupe-relais.

13. Gamme de boîtes de vitesses selon une des revendications précédentes, **caractérisée en ce que** la variante à 12 vitesses soit dotée, par rapport à la variante à 10 vitesses, d'un train d'engrenages supplémentaire (108-110), conçu de manière à ce que pour la boîte à 12 vitesses le rapport de démultiplication de la 9ème vitesse soit plus rapide d'un 1/2 saut de démultiplication par rapport au rapport de démultiplication de la 8ème vitesse de la variante à 10 rapports et **en ce que** le rapport de démultiplication de la 11ème vitesse soit plus rapide d'un 1/2 saut de démultiplication par rapport au rapport de démultiplication de la 9ème vitesse de la variante à 10 rapports.

14. Gamme de boîtes de vitesses selon une des revendications 1-12, **caractérisée en ce que** la variante à 12 vitesses soit dotée, par rapport à la variante à 10 vitesses, d'un train d'engrenages supplémentaire (116-117), conçu de manière à ce que pour la boîte à 12 vitesses le rapport de démultiplication de la 10ème vitesse soit plus rapide d'un 1/2 saut de démultiplication par rapport au rapport de démultiplication de la 9ème vitesse de la variante à 10 vitesses et **en ce que** le rapport de démultiplication de la 12ème vitesse soit plus rapide d'un 1/2 saut de démultiplication par rapport au rapport de démultiplication de la 10ème vitesse de la variante à 10 vitesses.

15. Gamme de boîtes de vitesses selon une des revendications précédentes, **caractérisée en ce que** dans les boîtes partielles (10, 40) soit prévu, respectivement, un nombre différent d'arbres de renvoi identiques, sachant que les trains d'engrenages des boîtes de vitesses (2) ayant des capacités de transmission de couple différentes, comportent des dents de largeur identique et que les carters et les commandes soient identiques.
